# EUROPEAN PATENT APPLICATION

(11) **EP 4 047 889 A1**
(43) Date of publication of application: **24.08.2022**
(21) Application number: 20892384.7
(22) Date of filing: 07.10.2020
(51) Int. Cl.: H04L 12/741

(54) **METHOD AND APPARATUS FOR PROCESSING FORWARDING ENTRY**

(30) Priority: 25.11.2019 CN 201911168692
(71) Applicant: Huawei Technologies Co., Ltd., Shenzhen, Guangdong 518129 (CN)
(72) Inventor: XIE, Jingrong, Shenzhen, Guangdong 518129 (CN)
(74) Representative: Goddar, Heinz J.
(86) International application number: PCT/CN2020/119849
(87) International publication number: WO 2021/103821

(57) **Abstract**

In a method for processing a forwarding entry in a bit indexed explicit replication BIER network, a second routing device is used only as a bit forwarding ingress router BFIR, and a first routing device obtains a first identifier and a second identifier that are advertised by the second routing device. The first identifier is a bit forwarding router identifier BFR-ID of the second routing device that is valid in a BIER sub-domain to which the second routing device belongs. The second identifier is used to indicate being used only as a BFIR. The first routing device skips, based on the first identifier and the second identifier, setting a bit that is in a forwarding bit mask F-BM and that corresponds to the first identifier. The F-BM is an F-BM included in all BIER forwarding entries corresponding to the BIER sub-domain on the first routing device. Forwarding entries generated by the first routing device do not include a forwarding entry used to forward a BIER multicast packet to the BFIR. During forwarding, the forwarding entry is not read or operated, so that forwarding efficiency can be improved.

## Description

This application claims priority to Chinese Patent Application No. CN201911168692.X, filed with the China National Intellectual Property Administration on November 25, 2019 and entitled "METHOD AND APPARATUS FOR PROCESSING FORWARDING ENTRY", which is incorporated herein by reference in its entirety.

### TECHNICAL FIELD

This application relates to the communications field, and in particular, to a method and an apparatus for processing a forwarding entry.

### BACKGROUND

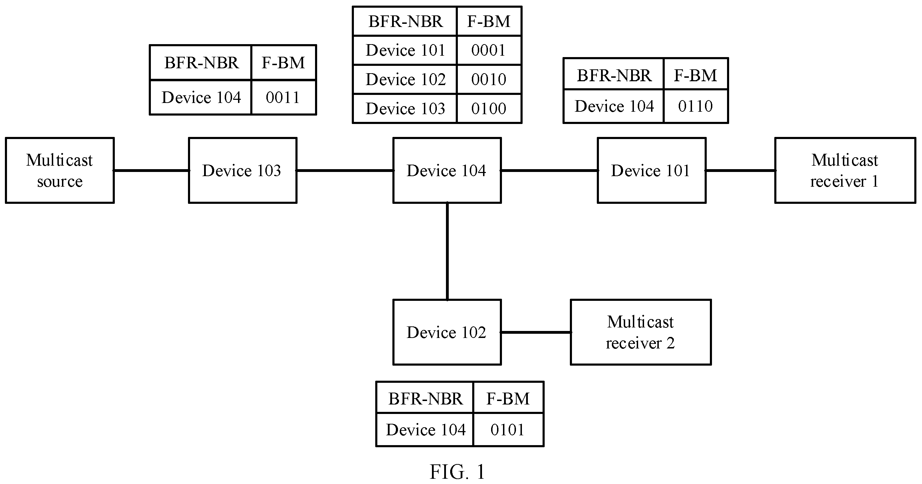

FIG. 1 is a schematic diagram of a bit indexed explicit replication (bit indexed explicit replication, BIER) network scenario. In the network scenario shown in FIG. 1, a device 103 is connected to a multicast source. The device 103 is a bit forwarding ingress router (bit forwarding ingress router, BFIR). A multicast receiver 1 connected to a device 101 and a multicast receiver 2 connected to a device 102 need to receive a multicast packet sent by the multicast source. Both the device 101 and the device 102 are bit forwarding egress routers (bit forwarding egress routers, BFERs). A device 104 is connected to the device 101, the device 102, and the device 103. The device 104 is a bit forwarding router (bit forwarding router, BFR). The device 101, the device 102, the device 103, and the device 104 are in a same BIER sub-domain.

The device 101, the device 102, the device 103, and the device 104 are assigned bit forwarding router identifiers (bit forwarding router identifiers, BFR-IDs) valid in the BIER sub-domain to which the devices belong. The BFR-ID of the device 101 is 1. The BFR-ID of the device 102 is 2. The BFR-ID of the device 103 is 3. Each device in FIG. 1 advertises a BFR-ID assigned to the device to a neighbor of the device. For example, the device 103 advertises the BFR-ID and an address of the device 103 to the device 104. The device 104 generates a first forwarding entry. The first forwarding entry includes a BFR neighbor (BFR neighbor, BFR-NBR) and a forwarding bit mask (forwarding bit mask, F-BM). The BFR-NBR of the first forwarding entry is used to indicate a next-hop BFR-NBR for the device 104 to reach a device identified by a BFR-ID. The BFR-NBR included in the first forwarding entry is the address of the device 103. A bit string (bit string) included in the F-BM of the first forwarding entry is 0100. 0100 indicates a device whose BFR-ID is 3. When the device 104 forwards a BIER multicast packet from the device 103 by using the first forwarding entry, forwarding efficiency is low.

### SUMMARY

Embodiments of this application provide a method and an apparatus for processing a forwarding entry, to improve forwarding efficiency.

According to a first aspect, a method for processing a forwarding entry is provided. The method is applied to a BIER network, and the method includes: A first routing device obtains a first identifier and a second identifier that are advertised by a second routing device. The first identifier is a BFR-ID of the second routing device that is valid in a BIER sub-domain to which the second routing device belongs, and the second identifier is used to indicate being used only as a BFIR. The first routing device skips, based on the first identifier and the second identifier, setting a bit that is in an F-BM and that corresponds to the first identifier. The F-BM is an F-BM included in all BIER forwarding entries corresponding to the BIER sub-domain on the first routing device. In some embodiments, the setting indicates setting to 1 and the skipping setting indicates setting to 0.

In the foregoing method, the first routing device may be any BFR in a BIER domain, and the second routing device is a BFIR in the BIER domain and is not used as a BFER. Forwarding entries generated by the first routing device do not include a forwarding entry used to forward a BIER multicast packet to the BFIR. A bit that is in a forwarding entry used to forward a BIER multicast packet and that corresponds to the BFIR to the BFIR is set. In this way, when forwarding a BIER multicast packet, the first routing device omits reading and operation on the forwarding entry, thereby improving forwarding efficiency.

In an implementation, the first routing device is directly connected to the second routing device, and that a first routing device obtains a first identifier and a second identifier that are advertised by a second routing device includes: the first routing device receives a message advertised by the second routing device. The message includes the first identifier and the second identifier.

The message may be an internal gateway protocol (Interior Gateway Protocol, IGP) message or a border gateway protocol (Border Gateway Protocol, BGP) message. If the first routing device and the second routing device are in a same BIER sub-domain, the message may be an IGP message. If the first routing device and the second routing device are in different BIER sub-domains, the message may be a BGP message.

In an implementation, that the first routing device skips, based on the first identifier and the second identifier, setting a bit that is in an F-BM and that corresponds to the first identifier includes: the first routing device skips, based on the first identifier and the second identifier, generating a first BIER forwarding entry. The first BIER forwarding entry indicates that a next-hop bit forwarding router neighbor BFR-NBR for the first routing device to reach a device identified by the first identifier is the second routing device.

That the first routing device is directly connected to the second routing device indicates that no BFR exists on a path between the first routing device and the second routing device. The first routing device determines, based on the first identifier and the second identifier, that a device identified by the first identifier is used only as a BFIR. The first routing device sets a bit (bit) that is in a bit string and that corresponds to the first identifier to 0, that is, the bit string is 0000. When the bit string is 0000, the first routing device does not generate a BIER forwarding entry that includes the first identifier and the bit string. The BIER forwarding entry that includes the first identifier and the bit string may be the first BIER forwarding entry.

In an implementation, the first routing device is connected to the second routing device by using a first BFR, and that a first routing device obtains a first identifier and a second identifier that are advertised by a second routing device includes: the first routing device receives a message advertised by the first BFR. The message includes the first identifier and the second identifier.

In an implementation, the first BFR is a next-hop BFR-NBR for the first routing device to reach the second routing device, and that the first routing device skips, based on the first identifier and the second identifier, setting a bit that is in a forwarding bit mask F-BM and that corresponds to the first identifier includes: the first routing device skips, based on the first identifier and the second identifier, generating a first BIER forwarding entry. The first BIER forwarding entry indicates that a next-hop BFR-NBR for the first routing device to reach the second routing device is the first BFR.

In an implementation, the first BFR is a next-hop BFR-NBR for the first routing device to reach the second routing device and at least one BFER, and that the first routing device skips, based on the first identifier and the second identifier, setting a bit that is in a forwarding bit mask F-BM and that corresponds to the first identifier includes: the first routing device skips, based on the first identifier and the second identifier, setting a bit that is in an F-BM of a second BIER forwarding entry and that corresponds to the first identifier. The second BIER forwarding entry indicates that next-hop BFR-NBRs for the first routing device to reach the BFER and the second routing device are the first BFR.

In the foregoing method, that the first routing device is connected to the second routing device by using a first BFR is an indirect connection manner. The indirect connection between the first routing device and the second routing device indicates that a path between the first routing device and the second routing device includes one or more BFRs. The path is used to forward a BIER multicast packet.

In an implementation, the message includes a sub-type-length-value (sub-type-length-value, sub-TLV) used to carry BIER information, the sub-TLV includes a BIER algorithm (BIER algorithm, BAR) field and a field used to carry the first identifier, and the BAR is used to carry the second identifier.

In an implementation, the message includes a sub-TLV used to carry BIER information, the sub-TLV includes a sub-sub-type-length-value (sub-sub-TLV) field and a field used to carry the first identifier, and the sub-sub-TLV is used to carry the second identifier.

In an implementation, the message includes a sub-type-length-value sub-TLV used to carry the first identifier and a sub-TLV used to carry the second identifier.

In an implementation, the message further includes an identifier of the BIER sub-domain.

According to a second aspect, a method for processing a forwarding entry is provided. The method is applied to a BIER network, and the method includes: A second routing device obtains a first identifier and a second identifier. The first identifier is a BFR-ID of the second routing device that is valid in a BIER sub-domain to which the second routing device belongs, and the second identifier is used to indicate being used only as a BFIR. The second routing device advertises the first identifier and the second identifier to a first routing device.

In the foregoing method, when the second routing device used only as a BFIR advertises the valid BFR-ID of the second routing device, the second routing device further advertises an identifier, for example, the second identifier, indicating that the second routing device is used only as a BFIR, so that a BFR that is in a BIER domain and that receives the second identifier can skip, based on the second identifier, setting a bit that is in an F-BM and that corresponds to the BFR-ID of the second routing device, to improve forwarding efficiency.

In an implementation, the second routing device advertises the first identifier and the second identifier to a BFR-NBR of the second routing device. The BFR-NBR of the second routing device includes the first routing device or a first BFR.

In a design, the second routing device is directly connected to the first routing device, and that a second routing device obtains a first identifier and a second identifier includes: the second routing device generates a message. The message includes the first identifier and the second identifier. That the second routing device advertises the first identifier and the second identifier to a first routing device includes: the second routing device advertises the message to the first routing device.

In another design, the second routing device is connected to the first routing device by using the first BFR, and that a second routing device obtains a first identifier and a second identifier includes: the second routing device generates a message. The message includes the first identifier and the second identifier. That the second routing device advertises the first identifier and the second identifier to a first routing device includes: the second routing device advertises the message to the first BFR.

For a specific manner of carrying the first identifier and the second identifier in the message, refer to corresponding content in the first aspect. For a specific protocol used for the message, refer to corresponding content in the first aspect. The message further includes an identifier of the BIER sub-domain.

According to a third aspect, an apparatus for processing a forwarding entry is provided. The apparatus is disposed on a first routing device, and the apparatus includes an obtaining unit and a processing unit. The obtaining unit is configured to obtain a first identifier and a second identifier that are advertised by a second routing device. The first identifier is a BFR-ID of the second routing device that is valid in a BIER sub-domain to which the second routing device belongs, and the second identifier is used to indicate being used only as a BFIR. The processing unit is configured to skip, based on the second identifier and the first identifier, setting a bit that is in an F-BM and that corresponds to the first identifier. The F-BM is an F-BM included in all BIER forwarding entries corresponding to the BIER sub-domain on the first routing device.

In an implementation, the apparatus further includes a unit configured to implement any implementation of the first aspect.

According to a fourth aspect, an apparatus for processing a forwarding entry is provided. The apparatus is disposed on a second routing device, and the apparatus includes an obtaining unit and a sending unit. The obtaining unit is configured to obtain a first identifier and a second identifier. The first identifier is a BFR-ID of the second routing device that is valid in a BIER sub-domain to which the second routing device belongs, and the second identifier is used to indicate being used only as a BFIR. The sending unit is configured to advertise the first identifier and the second identifier to a first routing device.

In an implementation, the apparatus further includes a unit configured to implement any implementation of the second aspect.

According to a fifth aspect, an apparatus for processing a forwarding entry is provided. The apparatus includes a processor, a memory, a bus, and a communications interface. The memory is configured to store computer-executable instructions, the processor is communicatively connected to the memory by using the bus or in another manner, and when the apparatus runs, the processor executes the computer-executable instructions or program code stored in the memory, to enable the apparatus to perform the method according to any one of the first aspect or the possible implementations of the first aspect. The apparatus may be the first routing device mentioned in any one of the first aspect or the possible implementations of the first aspect.

According to a sixth aspect, an apparatus for processing a forwarding entry is provided. The apparatus includes a processor, a memory, a bus, and a communications interface. The memory is configured to store computer-executable instructions or program code, the processor is communicatively connected to the memory by using the bus or in another manner, and when the apparatus runs, the processor executes the computer-executable instructions or program code stored in the memory, to enable the apparatus to perform the method according to any one of the second aspect or the possible implementations of the second aspect. The apparatus may be the second routing device mentioned in any one of the second aspect or the possible implementations of the second aspect.

According to a seventh aspect, a computer-readable storage medium is provided. The computer-readable storage medium includes instructions or program code, and when the computer-readable storage medium runs on a computer, the computer is enabled to perform the method according to any one of the first aspect or the possible implementations of the first aspect, or the computer is enabled to perform the method according to any one of the second aspect or the possible implementations of the second aspect.

According to an eighth aspect, a computer program product including instructions or program code is provided. When the computer program product runs on a computer, the computer is enabled to perform the method according to any one of the first aspect or the possible implementations of the first aspect, or the computer is enabled to perform the method according to any one of the second aspect or the possible implementations of the second aspect.

According to a ninth aspect, a system for processing a forwarding entry is provided. The system includes a first apparatus and a second apparatus. The second apparatus is configured to obtain a first identifier and a second identifier. The first identifier is a BFR-ID of the second apparatus that is valid in a BIER sub-domain to which the second apparatus belongs, and the second identifier is used to indicate being used only as a BFIR. The second apparatus is configured to advertise the first identifier and the second identifier to the first apparatus. The first apparatus is configured to obtain the first identifier and the second identifier that are advertised by the second apparatus. The first apparatus is configured to skip, based on the second identifier and the first identifier, setting a bit that is in an F-BM and that corresponds to the first identifier. The F-BM is an F-BM included in all BIER forwarding entries corresponding to the BIER sub-domain on the first routing device. The first apparatus may be the apparatus for processing a forwarding entry according to the third aspect or the fifth aspect. The second apparatus may be the apparatus for processing a forwarding entry according to the fourth aspect or the sixth aspect.

### BRIEF DESCRIPTION OF DRAWINGS

FIG. 1 is a schematic diagram of a BIER network scenario;
FIG. 2 is a schematic diagram of a BIER network scenario according to Embodiment 1 of this application;
FIG. 3 is a flowchart of a method for processing a forwarding entry according to Embodiment 1 of this application;
FIG. 4A is a schematic diagram of a type-length-value included in an advertised message according to an embodiment of this application;
FIG. 4B is a schematic diagram of a type-length-value included in an advertised message according to another embodiment of this application;
FIG. 4C is a schematic diagram of a type-length-value included in an advertised message according to still another embodiment of this application;
FIG. 5 is a schematic diagram of a BIER network scenario according to Embodiment 2 of this application;
FIG. 6 is a schematic diagram of a structure of an apparatus for processing a forwarding entry according to an embodiment of this application;
FIG. 7 is a schematic diagram of a structure of an apparatus for processing a forwarding entry according to an embodiment of this application; and
FIG. 8 is a schematic diagram of a structure of an apparatus for processing a forwarding entry according to an embodiment of this application.

### DESCRIPTION OF EMBODIMENTS

The following describes embodiments of this application with reference to the accompanying drawings.

Any entry in the embodiments of this application includes a BFR-NBR and an F-BM corresponding to the BFR-NBR. The BFR-NBR of the any entry is used to indicate a next-hop BFR-NBR for a device in which the entry is located to reach a device identified by the BFR-ID. The F-BM of the any entry includes a bit string (bit string). A bit set to 1 in the bit string indicates a device that is assigned a corresponding BFR-ID. For example, the first bit (in a direction from a least significant bit to a most significant bit, that is, a right-to-left direction) of a bit string 0001 stored in the F-BM is set to 1, and indicates a device whose BFR-ID is 1. The second bit of a bit string 0010 stored in the F-BM is set to 1, and indicates a device whose BFR-ID is 2. The third bit of a bit string 0100 stored in the F-BM is set to 1, and indicates a device whose BFR-ID is 3. The fourth bit of a bit string 1000 stored in the F-BM is set to 1, and indicates a device whose BFR-ID is 4. A bit string length (bit string length, BSL) of the F-BM may be a length such as 64 bits, 128 bits, or 256 bits, and a maximum bit string length of the F-BM may be 4096 bits. In the embodiments of this application, an example in which a maximum value of the BFR-ID is 3 or 4 is used for description. In some embodiments, the BFR-ID may alternatively be another value, for example, 128 or 256. If the BSL is 256 bits, but a value of a BFR-ID exceeds 256, devices whose BFR-IDs are 1 to 256 may be grouped into a set 0, and devices whose BFR-IDs are 257 to 512 may be grouped into a set 1. The set may be represented by using a set identifier (set identifier, SI). For example, the set 0 may be represented as SI=0, and the set 1 may be represented as SI=1. A combination of the SI and the bit string corresponds to a BFR-ID.

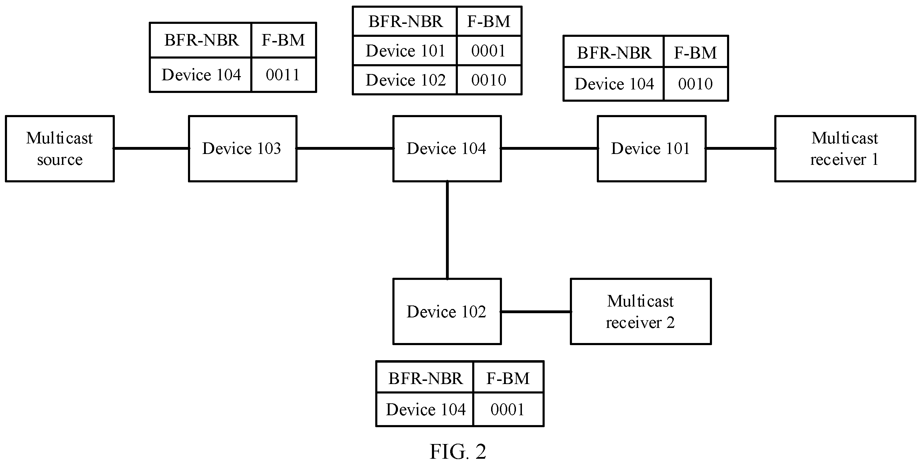

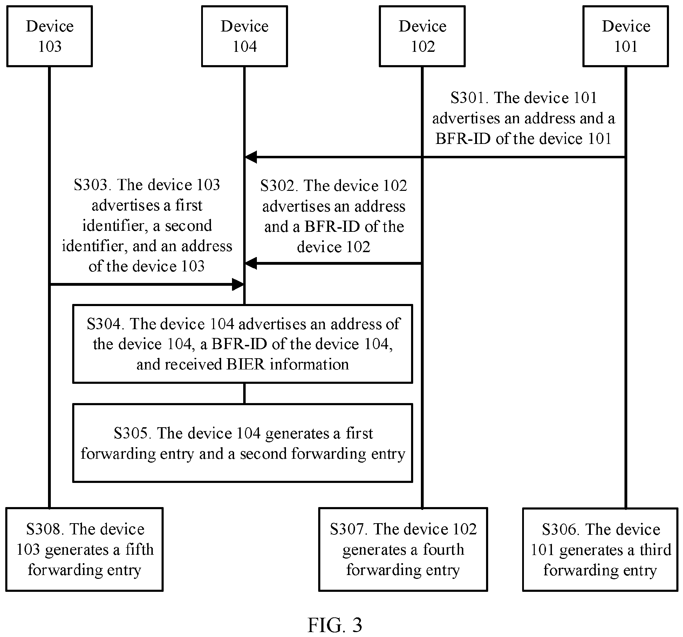

FIG. 2 is a schematic diagram of a BIER network scenario according to Embodiment 1 of this application. In the network shown in FIG. 2, a device 103 is connected to a multicast source. The device 103 is a BFIR. A multicast receiver 1 connected to a device 101 and a multicast receiver 2 connected to a device 102 need to receive a multicast packet sent by the multicast source. Both the device 101 and the device 102 are BFERs. A device 104 is connected to the device 101, the device 102, and the device 103. The device 104 is a BFR. The device 101, the device 102, the device 103, and the device 104 are in a same BIER sub-domain (sub-domain). For example, identifiers of BIER sub-domains to which the devices belong are all 0. Each of the device 101, the device 102, and the device 103 is configured with a BFR-ID valid in the BIER sub-domain to which the device belongs. The BFR-ID valid in the BIER sub-domain that is mentioned in this embodiment of this application refers to a BFR-ID whose value is not 0. The BFR-ID of the device 101 is 1. The BFR-ID of the device 102 is 2. The BFR-ID of the device 103 is 3. The following describes, with reference to FIG. 2 and FIG. 3, a method for processing a forwarding entry according to Embodiment 1 of this application.

S301. The device 101 advertises an address and the BFR-ID of the device 101.

For example, the device 101 may advertise the address and the BFR-ID of the device 101 to an IGP neighbor of the device 101 by using an IGP. In FIG. 2, the device 104 is an IGP neighbor of the device 101, and the device 104 is a BFR-NBR of the device 101. The device 101 advertises, to the device 104 by using the IGP, the address of the device 101 and the BFR-ID assigned to the device 101.

S302. The device 102 advertises an address and the BFR-ID of the device 102.

For example, the device 102 may advertise to an IGP neighbor, such as the device 104, of the device 102 by using the IGP, the address of the device 102 and the BFR-ID assigned to the device 102. The device 104 is a BFR-NBR of the device 102.

S303. The device 103 advertises a first identifier, a second identifier, and an address of the device 103.

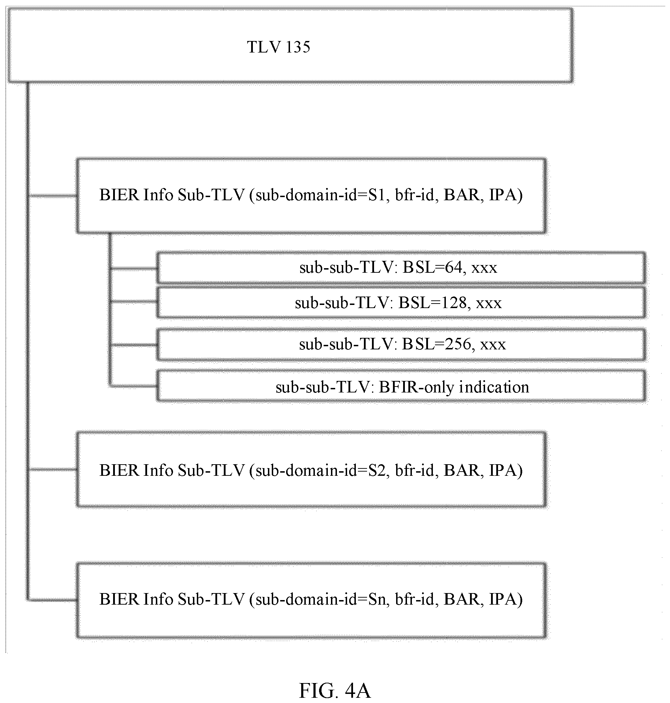

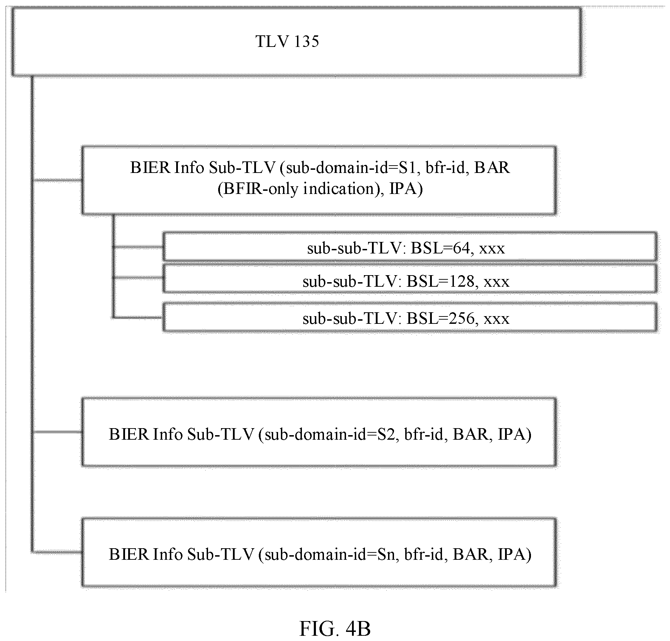

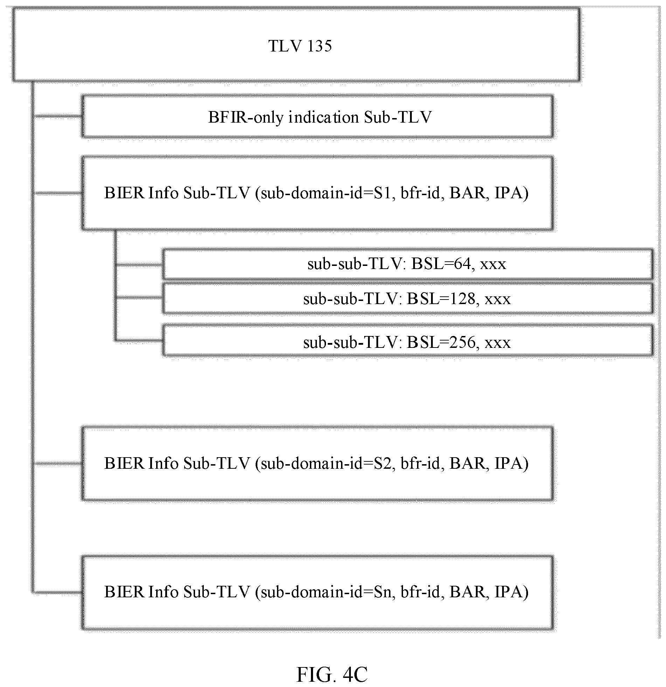

For example, the device 103 may advertise the first identifier, the second identifier, and the address of the device 103 to an IGP neighbor, such as the device 104, of the device 103 by using the IGP. The device 104 is a BFR-NBR of the device 103. The first identifier is the valid BFR-ID assigned to the device 103. The second identifier is used to indicate being used only as a BFIR. The being used only as a BFIR can be represented as bfir-only. The second identifier may be carried in BIER information in an advertised message. For example, the device 103 advertises third BIER information through intermediate system to intermediate system (Intermediate System to Intermediate System, IS-IS) flooding. The second identifier may be carried in BIER information in a TLV 135, a TLV 235, a TLV 236, or a TLV 237 in an advertised IS-IS message, such as a link-state advertisement (link-state advertisement, LSA). The device 103 advertises an LSA to an IS-IS neighbor of the device 103. The LSA includes the second identifier. In some embodiments, the LSA includes a TLV 135, a TLV 235, a TLV 236, or a TLV 237, and the TLV 135, the TLV 235, the TLV 236, or the TLV 237 includes the second identifier. In some embodiments, the LSAfurther includes the first identifier. The first identifier may be carried in the TLV 135, the TLV 235, the TLV 236, or the TLV 237 of the LSA, and may be specifically carried in a BFR-id field in a sub-TLV included in the TLV For details, refer to corresponding content in FIG. 4A to FIG. 4C. The following describes, by using the TLV 135 as an example, a manner of carrying the second identifier. Specifically, the following manners may be used: Manner 1: The second identifier may be carried in a sub-sub-TLV field of a BIER information sub-TLV in FIG. 4A. Specifically, Type may be used to indicate being used only as a BFIR, and Length is 0. Alternatively, Type is an attribute (attribute), Length is X, and indication information carried in V corresponds to being used only as a BFIR. For example, the indication information carried in V is 1, indicating being used only as a BFIR. Manner 2: The second identifier may be carried in a BAR field of a BIER information sub-TLV in FIG. 4B, and a value is assigned to the BAR to indicate being used only as a BFIR. For example, the BAR is 128, indicating being used only as a BFIR. That is, the BAR being 128 indicates that a role of the device is bfir-only. Manner 1 and Manner 2 indicate that a device corresponding to a BFR-ID in a sub-domain whose sub-domain identifier (sub-domain-id=S1) is S1 is bfir-only. Manner 3: The second identifier may be carried in a sub-TLV used to indicate bfir-only information in FIG. 4C. Specifically, bfir-only may be represented by using Type in the sub-TLV Manner 3 indicates that a device corresponding to a corresponding BFR-ID in a plurality of sub-domains from sub-domain-id=S1 to sub-domain-id=Sn is bfir-only. The device that receives the first identifier and the second identifier may determine, based on the first identifier and the second identifier, that a device used only as a BFIR is a device identified by the first identifier.

S304. The device 104 advertises an address of the device 104, a BFR-ID of the device 104, and received BIER information.

For example, the device 104 advertises fourth BIER information to IGP neighbors, such as the device 101, the device 102, and the device 103, of the device 104. The fourth BIER information includes the address of the device 104 and the BFR-ID of the device 104. The BFR-ID value of the device 104 is 0.

The device 104 further advertises the received BIER information, including:
advertising, to the device 101 and the device 102, the third BIER information received from the device 103, where the third BIER information includes the first identifier, the second identifier, and the address of the device 103;
advertising, to the device 101 and the device 103, second BIER information received from the device 102, where the second BIER information includes the address of the device 102 and the BFR-ID of the device 102; and
advertising, to the device 102 and the device 103, first BIER information received from the device 101, where the first BIER information includes the address of the device 101 and the BFR-ID of the device 101.

The device 104 not only advertises the BIER information of the device 104 to each IGP neighbor, but also advertises BIER information received from any IGP neighbor to another IGP neighbor. This is an IGP flooding mechanism.

In this embodiment of this application, an execution sequence in which the device 104, the device 103, the device 102, and the device 101 advertise their BIER information to each IGP neighbor, and advertise BIER information received from any IGP neighbor to another IGP neighbor is not limited.

In the foregoing steps, there is no sequence in which the device 101, the device 102, the device 103, and the device 104 advertise the addresses and the BFR-IDs by using the IGP.

S305. The device 104 generates a first forwarding entry and a second forwarding entry.

For example, the device 104 determines, based on the received first BIER information, that a next-hop BFR-NBR for the device 104 to reach a device (device 101) whose BFR-ID is 1 is the device 101. The device 104 generates the first forwarding entry based on the address of the device 101 and the BFR-ID of the device 101. The first forwarding entry includes a first BFR-NBR and a first F-BM. A bit that is in a bit string stored in the first F-BM and that corresponds to the BFR-ID of the device 101 is set to 1. The first BFR-NBR is used to indicate a next-hop BFR-NBR for a device (device 104) in which the first forwarding entry is located to reach a device (device 101) identified by the BFR-ID. The bit string of the first F-BM is 0001. 0001 indicates the device (device 101) whose BFR-ID is 1. The first BFR-NBR is the address of the device 101. The first forwarding entry indicates that the next-hop BFR-NBR for the device 104 to reach the device whose BFR-ID is 1 is the device 101. The device 104 determines, based on the received second BIER information, that a next-hop BFR-NBR for the device 104 to reach a device (device 102) whose BFR-ID is 2 is the device 102. The device 104 generates the second forwarding entry based on the address of the device 102 and the BFR-ID of the device 102. The second forwarding entry includes a second BFR-NBR and a second F-BM. A bit string of the second F-BM is 0010. 0010 indicates the device (device 102) whose BFR-ID is 2. The second BFR-NBR is the address of the device 102. The second forwarding entry indicates that the next-hop BFR-NBR for the device 104 to reach the device whose BFR-ID is 2 is the device 102.

For example, the device 104 determines, based on the received first identifier (the BFR-ID of the device 103 in the BIER sub-domain to which the device 103 belongs) and second identifier, that the device 103 is used only as a BFIR, and does not generate a forwarding entry corresponding to the first identifier. In this way, when receiving a BIER multicast packet from the device 103, the device 104 does not need to perform search and comparison on the forwarding entry corresponding to the first identifier as in common forwarding processing, so that storage resources can be saved, and forwarding efficiency can be improved.

S306. The device 101 generates a third forwarding entry.

For example, the device 101 determines, based on the received fourth BIER information, second BIER information, and third BIER information, that both next-hop BFR-NBRs for the device 101 to reach a device (device 102) whose BFR-ID is 2 and a device (device 103) whose BFR-ID is 3 are the device 104. The device 101 determines, based on the received first identifier (the BFR-ID of the device 103 in the BIER sub-domain to which the device 103 belongs) and second identifier, that the device 103 is used only as a BFIR. The device 101 generates the third forwarding entry based on the address of the device 104 and the BFR-ID of the device 102. The third forwarding entry includes a third BFR-NBR and a third F-BM. The third BFR-NBR is the address of the device 104. A value of the third F-BM is 0010. 0010 indicates that a bit corresponding to the device (device 102) whose BFR-ID is 2 is set, and a bit corresponding to the device (device 103) whose BFR-ID is 3 is not set. The third forwarding entry indicates that the next-hop BFR-NBR for the device 101 to reach the device (device 102) whose BFR-ID is 2 is the device 104.

S307. The device 102 generates a fourth forwarding entry.

For example, the device 102 determines, based on the received fourth BIER information, first BIER information, and third BIER information, that both next-hop BFR-NBRs for the device 102 to reach a device (device 101) whose BFR-ID is 1 and a device (device 103) whose BFR-ID is 3 are the device 104. The device 102 determines, based on the received first identifier (the BFR-ID of the device 103 in the BIER sub-domain to which the device 103 belongs) and second identifier, that the device 103 is used only as a BFIR. The device 102 generates the fourth forwarding entry based on the address of the device 104 and the BFR-ID of the device 101. The fourth forwarding entry includes a fourth BFR-NBR and a fourth F-BM. The fourth BFR-NBR is the address of the device 104. A value of the fourth F-BM is 0001. 0001 indicates that a bit corresponding to the device (device 101) whose BFR-ID is 1 is set, and a bit corresponding to the device (device 103) whose BFR-ID is 3 is not set. The fourth forwarding entry indicates that the next-hop BFR-NBR for the device 102 to reach the device (device 101) whose BFR-ID is 1 is the device 104.

S308. The device 103 generates a fifth forwarding entry.

For example, the device 103 determines, based on the received fourth BIER information, first BIER information, and second BIER information, that both next-hop BFR-NBRs for the device 103 to reach a device (device 101) whose BFR-ID is 1 and a device (device 102) whose BFR-ID is 2 are the device 104. The device 103 generates the fifth forwarding entry based on the address of the device 104, the BFR-ID of the device 101, and the BFR-ID of the device 102. The fifth forwarding entry includes a fifth BFR-NBR and a fifth F-BM. The fifth BFR-NBR is the address of the device 104. A value of the fifth F-BM is 0011. 0011 indicates that a bit corresponding to the device (device 101) whose BFR-ID is 1 is set, and a bit corresponding to the device (device 102) whose BFR-ID is 2 is set. The fifth forwarding entry indicates that the next-hop BFR-NBRs for the device 103 to reach the device (device 101) whose BFR-ID is 1 and the device (device 102) whose BFR-ID is 2 are the device 104.

An execution sequence of S305 to S308 may be as follows: S305, S306, S307, and S308 are performed simultaneously, or S307 and S308 are performed simultaneously and before S305 and S306, or S306 and S307 are performed simultaneously and before S305, or S306 and S308 are performed simultaneously and before S305, or S307 is performed before S306, or S308 is performed before S307, or any possible sequencing manner is used. In this embodiment of this application, examples of possible execution sequences are not described one by one.

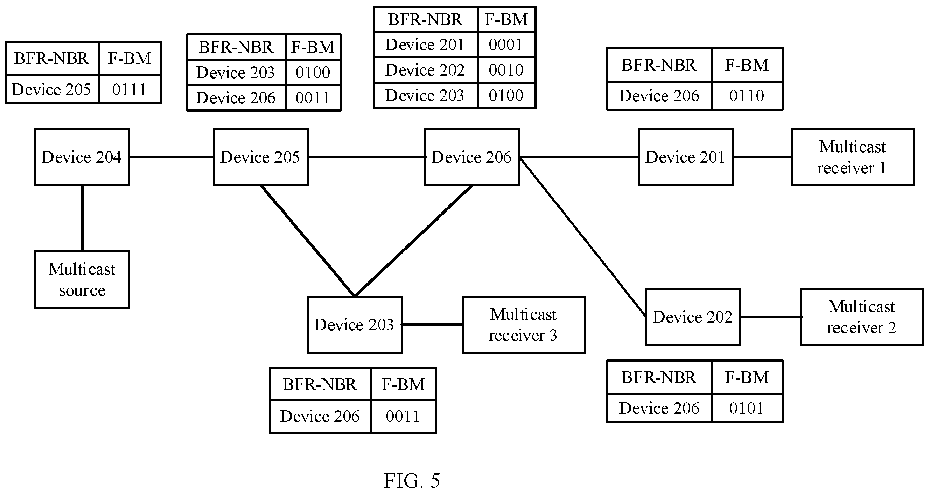

FIG. 5 is a schematic diagram of a BIER network scenario according to Embodiment 2 of this application. In the network shown in FIG. 5, a device 204 is connected to a multicast source. The device 204 is a BFIR. A multicast receiver 1 connected to a device 201, a multicast receiver 2 connected to a device 202, and a multicast receiver 3 connected to a device 203 need to receive a multicast packet sent by the multicast source. The device 201, the device 202, and the device 203 are all BFERs. A device 206 is connected to the device 201, the device 202, the device 203, and a device 205. The device 205 is further connected to the device 204. The device 205 and the device 206 are BFRs. In this embodiment of this application, a BFR, for example, the device 205 and the device 206, is assigned an invalid BFR-ID. A BFR-ID whose value is 0 is a representation form of the invalid BFR-ID. Alternatively, another representation form may be used to represent the invalid BFR-ID. This is not limited in this embodiment of this application. Each of the device 201, the device 202, the device 203, and the device 204 is configured with a BFR-ID valid in a BIER sub-domain to which the device belongs. The BFR-ID of the device 201 is 1. The BFR-ID of the device 202 is 2. The BFR-ID of the device 203 is 3. The BFR-ID of the device 204 is 4. The device 201, the device 202, the device 203, the device 204, and the device 205 belong to a same BIER sub-domain. The following describes, with reference to FIG. 5, a method for processing a forwarding entry according to Embodiment 2 of this application.

Any one of the device 201, the device 202, the device 203, the device 204, the device 205, and the device 206 advertises an address and a BFR-ID of the device to an IGP neighbor of the device by using an IGP, and any IGP neighbor may further advertise a received address and BFR-ID of another device by using the IGP. Examples are as follows:

The device 201 advertises first BIER information to an IGP neighbor, that is, the device 206, of the device 201. The first BIER information includes an address of the device 201 and the BFR-ID of the device 201.

The device 202 advertises second BIER information to an IGP neighbor, that is, the device 206, of the device 202. The second BIER information includes an address of the device 202 and the BFR-ID of the device 202.

The device 203 advertises third BIER information to an IGP neighbor of the device 203. The third BIER information includes an address of the device 203 and the BFR-ID of the device 203. The IGP neighbor of the device 203 includes the device 205 and the device 206.

The device 204 advertises fourth BIER information to an IGP neighbor, that is, the device 205, of the device 204. The fourth BIER information includes an address of the device 204, a first identifier, and a second identifier. The first identifier is the BFR-ID of the device 204. The second identifier is used to indicate being used only as a BFIR.

The device 205 advertises fifth BIER information to an IGP neighbor of the device 205. The fifth BIER information includes an address of the device 205 and the BFR-ID whose value is 0. The IGP neighbor of the device 205 includes the device 206, the device 203, and the device 204.

The device 206 advertises sixth BIER information to an IGP neighbor of the device 206. The sixth BIER information includes an address of the device 206 and the BFR-ID whose value is 0. The IGP neighbor of the device 206 includes the device 205, the device 203, the device 202, and the device 201.

After receiving BIER information from an IGP neighbor, the devices 205, 206, and 203 further advertise the BIER information to another IGP neighbor. Examples are as follows:

The device 206 advertises the first BIER information, the second BIER information, and the third BIER information that are received by the device 206 to the device 205, so that the device 205 has information from all the other devices, for example, the first BIER information, the second BIER information, the third BIER information, the fourth BIER information, and the sixth BIER information.

The device 205 advertises the fourth BIER information and the third BIER information that are received by the device 205 to the device 206, so that the device 206 has information from all the other devices, for example, the first BIER information, the second BIER information, the third BIER information, the fourth BIER information, and the fifth BIER information.

When the device advertises a plurality of pieces of BIER information, the plurality of pieces of BIER information may be advertised successively, or may be advertised simultaneously. Examples of specific advertising manners are not described one by one in this embodiment of this application. In the foregoing manner, each of the device 201, the device 202, the device 203, the device 204, the device 205, and the device 206 may obtain addresses of other devices and BFR-IDs of the other devices.

The device 204 is used as an example. The device 204 determines, based on the BFR-ID whose value is 0 in the fifth BIER information, that the device 205 is a BFR. The device 204 determines, based on the first BIER information, the second BIER information, and the third BIER information from the device 205, that next-hop BFR-NBRs to reach a device (device 201) whose BFR-ID is 1, a device (device 202) whose BFR-ID is 2, and a device (device 203) whose BFR-ID is 3 are the device 205. The device 204 generates a first forwarding entry based on the BFR-ID of the device 201, the BFR-ID of the device 202, the BFR-ID of the device 203, and the address of the device 205. A BFR-NBR in the first forwarding entry is the address of the device 205. An F-BM in the first forwarding entry is 0111. 0111 indicates the device (device 201) whose BFR-ID is 1, the device (device 202) whose BFR-ID is 2, and the device (device 203) whose BFR-ID is 3.

The device 205 is used as an example. The device 205 determines, based on the third BIER information, that a next-hop BFR-NBR for the device 205 to reach a device (device 203) whose BFR-ID is 3 is the device 203. The device 205 generates a second forwarding entry based on the address of the device 203 and the BFR-ID of the device 203. A BFR-NBR in the second forwarding entry is the address of the device 203. An F-BM in the second forwarding entry is 0100. The device 205 determines, based on the BFR-ID whose value is 0 in the sixth BIER information, that the device 206 is a BFR. The device 205 determines, based on the first BIER information and the second BIER information, that next-hop BFR-NBRs to reach a device (device 202) whose BFR-ID is 2 and a device (device 201) whose BFR-ID is 1 are the device 206. The device 205 generates a third forwarding entry based on the BFR-ID of the device 201, the BFR-ID of the device 202, the BFR-ID of the device 203, and the address of the device 206. A BFR-NBR in the third forwarding entry is the address of the device 206. An F-BM in the third forwarding entry is 0011. 0011 indicates the device (device 202) whose BFR-ID is 2 and the device (device 201) whose BFR-ID is 1. The device 205 determines, based on the first identifier (the BFR-ID assigned to the device 204 and valid in the BIER sub-domain to which the device 204 belongs) and the second identifier, that the device 204 is used only as a BFIR (the device 204 is not used as a BFER connected to a multicast receiver). The device 205 does not generate a forwarding entry corresponding to the first identifier. In the forwarding entry corresponding to the first identifier, a bit that is in a bit string included in an F-BM of the forwarding entry and that corresponds to the first identifier is set to 1.

The device 206 is used as an example. The device 206 generates a fourth forwarding entry based on the third BIER information. A BFR-NBR in the fourth forwarding entry is the address of the device 203. An F-BM in the fourth forwarding entry is 0100. The device 206 generates a fifth forwarding entry based on the second BIER information. A BFR-NBR in the fifth forwarding entry is the address of the device 202. An F-BM in the fifth forwarding entry is 0010. The device 206 generates a sixth forwarding entry based on the first BIER information. A BFR-NBR in the sixth forwarding entry is the address of the device 201. An F-BM in the sixth forwarding entry is 0001. The device 206 determines, based on the first identifier (the BFR-ID assigned to the device 204 and valid in the BIER sub-domain to which the device 204 belongs) and the second identifier, that the device 204 is used only as a BFIR. The device 206 does not generate a forwarding entry corresponding to the first identifier included in the fourth BIER information. In the forwarding entry corresponding to the first identifier, a bit that is in a bit string included in an F-BM of the forwarding entry and that corresponds to the first identifier is set to 1.

The device 201 is used as an example. The device 201 determines, based on the BFR-ID whose value is 0 in the sixth BIER information, that the device 206 is a BFR. The device 201 determines, based on the second BIER information and the third BIER information from the device 206, that next-hop BFR-NBRs to reach a device (device 203) whose BFR-ID is 3 and a device (device 202) whose BFR-ID is 2 are the device 206. The device 201 generates a seventh forwarding entry based on the BFR-ID of the device 202, the BFR-ID of the device 203, and the address of the device 206. A BFR-NBR in the seventh forwarding entry is the address of the device 206. An F-BM in the seventh forwarding entry is 0110. 0110 indicates the device (device 203) whose BFR-ID is 3 and the device (device 202) whose BFR-ID is 2. The device 201 determines, based on the fourth BIER information, that a next-hop BFR-NBR to reach a device identified by the first identifier included in the fourth BIER information is the device 206. The device 201 determines, based on the first identifier (the BFR-ID assigned to the device 204 and valid in the BIER sub-domain to which the device 204 belongs) and the second identifier, that the device 204 is used only as a BFIR. The device 201 does not generate a forwarding entry corresponding to the first identifier. That the device 201 does not generate a forwarding entry corresponding to the first identifier means that a bit that is in a bit string included in the F-BM in the seventh forwarding entry generated by the device 201 and that corresponds to the first identifier is set to 0.

The device 202 is used as an example. The device 202 determines, based on the BFR-ID whose value is 0 in the sixth BIER information, that the device 206 is a BFR. The device 201 determines, based on the first BIER information and the third BIER information, that next-hop BFR-NBRs to reach a device (device 203) whose BFR-ID is 3 and a device (device 201) whose BFR-ID is 1 are the device 206. The device 202 generates an eighth forwarding entry based on the BFR-ID of the device 201, the BFR-ID of the device 203, and the address of the device 206. A BFR-NBR in the eighth forwarding entry is the address of the device 206. An F-BM in the eighth forwarding entry is 0101. 0101 indicates the device (device 203) whose BFR-ID is 3 and the device (device 201) whose BFR-ID is 1. The device 202 determines, based on the fourth BIER information, that a next-hop BFR-NBR to reach a device identified by the first identifier is the device 206. The device 202 determines, based on the first identifier (the BFR-ID assigned to the device 204 and valid in the BIER sub-domain to which the device 204 belongs) and the second identifier, that the device 204 is used only as a BFIR. The device 202 does not generate a forwarding entry corresponding to the first identifier. That the device 202 does not generate a forwarding entry corresponding to the first identifier means that a bit that is in a bit string included in the F-BM in the eighth forwarding entry generated by the device 202 and that corresponds to the first identifier is set to 0.

The device 203 is used as an example. The device 203 determines, based on the BFR-ID whose value is 0 in the sixth BIER information and the BFR-ID whose value is 0 in the fifth BIER information, that the device 205 and the device 206 are BFRs. The device 203 generates a ninth forwarding entry based on the BFR-ID of the device 201, the BFR-ID of the device 202, and the address of the device 206. A BFR-NBR in the ninth forwarding entry is the address of the device 206. An F-BM in the ninth forwarding entry is 0011. 0011 indicates the device (device 202) whose BFR-ID is 2 and the device (device 201) whose BFR-ID is 1. The device 203 determines, based on the first identifier (the BFR-ID assigned to the device 204 and valid in the BIER sub-domain to which the device 204 belongs) and the second identifier, that the device 204 is used only as a BFIR. The device 203 does not generate a forwarding entry corresponding to the first identifier. That the device 203 does not generate a forwarding entry corresponding to the first identifier means that a bit that is in a bit string included in the F-BM in the ninth forwarding entry generated by the device 203 and that corresponds to the first identifier is set to 0.

The first forwarding entry to the ninth forwarding entry are used to forward a BIER multicast packet. The following describes, with reference to the foregoing forwarding entries, a process of forwarding a BIER multicast packet.

The device 204 is used as an example. The device 204 receives a multicast packet from the multicast source. The device 204 obtains the bit string 0111 based on a preset correspondence, and a multicast source address and a multicast group address that are included in the multicast packet. The correspondence includes the multicast group address, the multicast source address, and the bit string 0111. The bit string 0111 corresponds to the device whose BFR-ID is 1, the device whose BFR-ID is 2, and the device whose BFR-ID is 3. The correspondence indicates that multicast receivers connected to the devices corresponding to the bit string belong to a multicast group identified by the multicast group address, and the devices corresponding to the bit string receive a multicast packet sent by a multicast source corresponding to the multicast source address. The device 204 obtains a first BIER multicast packet based on the bit string and the multicast packet. A bit string included in the first BIER multicast packet is 0111, indicating that the BIER multicast packet needs to be forwarded to the device whose BFR-ID is 1, the device whose BFR-ID is 2, and the device whose BFR-ID is 3. The device 204 determines, based on the bit string in the first BIER multicast packet and the first forwarding entry, to send the first BIER multicast packet to the device 205 used as a BFR-NBR. The device 204 performs an AND (AND) operation on the bit string in the first BIER multicast packet and the F-BM in the first forwarding entry, and a result is not 0. In this case, the device 204 sends the first BIER multicast packet to the device 205 based on the BFR-NBR in the first forwarding entry.

The device 205 is used as an example. The device 205 determines, based on the bit string in the received first BIER multicast packet, the second forwarding entry, and the third forwarding entry, to forward the multicast packet to the device 206 and the device 203 that are used as BFR-NBRs. The device 205 performs an AND (AND) operation on the bit string in the first BIER multicast packet and the F-BM in the second entry, and obtains a first bit string whose value is 0100. The device 205 replaces the bit string in the first BIER multicast packet with the first bit string, to obtain a second BIER multicast packet. The device 205 sends the second BIER multicast packet to the device 203 based on the BFR-NBR in the second entry. The device 205 performs an AND operation on the bit string in the first BIER multicast packet and the F-BM in the third entry, and obtains a second bit string whose value is 0011. The device 205 replaces the bit string in the first BIER multicast packet with the second bit string, to obtain a third BIER multicast packet. The device 205 sends the third BIER multicast packet to the device 206 based on the BFR-NBR in the third entry.

The device 203 is used as an example. The device 203 determines, based on the first bit string in the second BIER multicast packet (a bit that is in the first bit string and that corresponds to the BFR-ID of the device 203 that is valid in the BIER sub-domain to which the device 203 belongs is set to 1), that the second BIER multicast packet is sent to the device 203. The device 203 may decapsulate the second BIER multicast packet to obtain the multicast packet, and send the multicast packet to the multicast receiver 3. The device 203 performs an AND operation based on the first bit string and the F-BM in the ninth forwarding entry, and obtains a bit string whose value is 0000. In this case, the device 203 does not perform a forwarding action based on the BFR-NBR in the ninth forwarding entry.

The device 206 is used as an example. The device 206 determines, based on the second bit string in the received third BIER multicast packet, the fifth forwarding entry, and the sixth forwarding entry, to forward the multicast packet to the device 201 and the device 202. The device 206 performs an AND (AND) operation on the second bit string in the third BIER multicast packet and the F-BM in the fourth entry, and obtains a bit string whose value is 0000. The device 206 does not send the BIER multicast packet to the device indicated by the BFR-NBR in the fourth forwarding entry. The device 206 performs an AND (AND) operation on the second bit string in the third BIER multicast packet and the F-BM in the fifth entry, and obtains a third bit string whose value is 0010. The device 206 replaces the second bit string in the third BIER multicast packet with the third bit string, to obtain a fourth BIER multicast packet. The device 206 sends the fourth BIER multicast packet to the device 202 based on the BFR-NBR in the fifth entry. The device 206 performs an AND operation on the second bit string in the third BIER multicast packet and the F-BM in the sixth entry, and obtains a fourth bit string whose value is 0001. The device 206 replaces the second bit string in the third BIER multicast packet with the fourth bit string, to obtain a fifth BIER multicast packet. The device 206 sends the fifth BIER multicast packet to the device 201 based on the BFR-NBR in the sixth entry.

The device 201 is used as an example. The device 201 determines, based on the fourth bit string in the fifth BIER multicast packet (a bit that is in the fourth bit string and that corresponds to the BFR-ID of the device 201 that is valid in the BIER sub-domain to which the device 201 belongs is set to 1), that the fifth BIER multicast packet is sent to the device 201. The device 201 may decapsulate the fifth BIER multicast packet to obtain the multicast packet, and send the multicast packet to the multicast receiver 1. The device 201 performs an AND operation based on the fourth bit string and the F-BM in the seventh forwarding entry, and obtains a bit string whose value is 0000. In this case, the device 201 does not send the BIER multicast packet to the device indicated by the BFR-NBR in the seventh forwarding entry.

The device 202 is used as an example. The device 202 determines, based on the third bit string in the fourth BIER multicast packet (a bit that is in the third bit string and that corresponds to the BFR-ID of the device 202 that is valid in the BIER sub-domain to which the device 202 belongs is set to 1), that the fourth BIER multicast packet is sent to the device 202. The device 202 may decapsulate the fourth BIER multicast packet to obtain the multicast packet, and send the multicast packet to the multicast receiver 2. The device 202 performs an AND operation based on the third bit string and the F-BM in the eighth forwarding entry, and obtains a bit string whose value is 0000. In this case, the device 202 does not send the BIER multicast packet to the device indicated by the BFR-NBR in the eighth forwarding entry.

In the method provided in Embodiment 2 of this application, the device 205 and the device 206 do not generate a forwarding entry corresponding to the BFR-ID of the device 204. In this way, when forwarding a BIER multicast packet, the device 205 and the device 206 do not need to look up a table or perform an AND operation to determine whether to send the BIER multicast packet to the device 204, which saves storage space and improves forwarding efficiency.

Optionally, BIER information advertised by using the IGP or a BGP further includes an identifier of a BIER sub-domain to which a device used only as a BFIR belongs.

In this embodiment of this application, a BIER domain refers to a network area in which BIER information can be advertised by using the IGP or the BGP and a forwarding entry used to forward a BIER multicast packet can be generated. If the IGP is deployed and BIER information is advertised in an autonomous system (autonomous system, AS) domain, the AS domain is a BIER domain. In a network with a plurality of AS domains, the IGP may be deployed and BIER information may be advertised in different AS domains, and the BGP is deployed between the AS domains but BIER information is not advertised. In this case, the plurality of AS domains are different BIER domains. For details about meanings of a BIER, a BFR, a BFIR, a BIER domain, and a BIER sub-domain, refer to IETF RFC 8279. One BIER domain includes one or more sub-domains. If a BIER domain includes a plurality of sub-domains, each BFR in the BIER domain is configured with one or more sub-domain identifiers. If one BFR belongs to different BIER sub-domains, for example, a first BIER sub-domain and a second BIER sub-domain, a BFR-ID of the BFR that is valid in the first BIER sub-domain may be the same as or may be different from a BFR-ID of the BFR that is valid in the second BIER sub-domain. The IGP flooding in the foregoing embodiment may be specifically IS-IS flooding or open shortest path first (Open Shortest Path First, OSPF) flooding. A message subjected to IS-IS flooding or OSPF flooding may be an LSA. If a BFIR and a BFER are in different AS domains, BGP flooding may be performed.

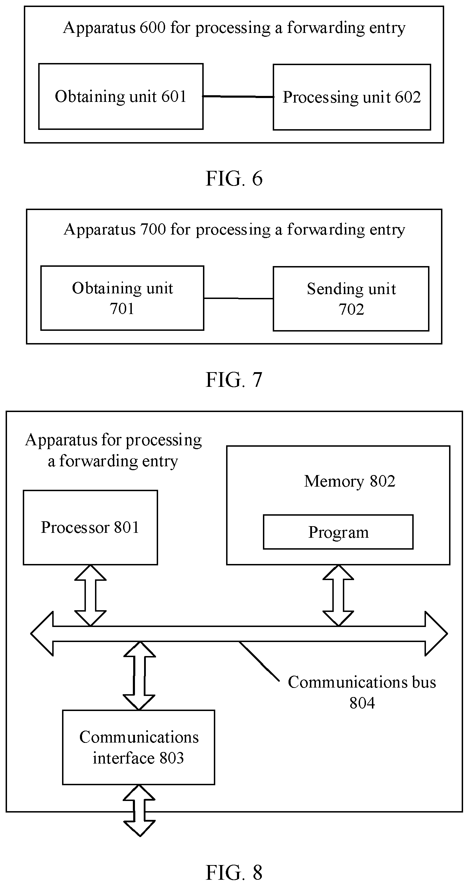

FIG. 6 is a schematic diagram of a structure of an apparatus for processing a forwarding entry according to an embodiment of this application. The apparatus 600 provided in the embodiment corresponding to FIG. 6 is described from a perspective of a logical structure, and may be disposed on a first routing device. The first routing device may be a device other than the device 103 in Embodiment 1 or a device other than the device 204 in Embodiment 2. A second routing device in the embodiment corresponding to FIG. 6 may be the device 103 in Embodiment 1 or the device 204 in Embodiment 2. The following describes, with reference to FIG. 6, an apparatus structure provided in this embodiment of this application.

The device 600 includes an obtaining unit 601 and a processing unit 602. The obtaining unit 601 is configured to obtain a first identifier and a second identifier that are advertised by the second routing device. The first identifier is a BFR-ID of the second routing device that is valid in a sub-domain to which the second routing device belongs. The second identifier is used to indicate being used only as a BFIR. The processing unit 602 is configured to skip, based on the second identifier and the first identifier, setting a bit that is in a forwarding bit mask F-BM and that corresponds to the first identifier. The F-BM is an F-BM included in all BIER forwarding entries corresponding to the BIER sub-domain on the first routing device.

In a manner, the first routing device is directly connected to the second routing device, and the obtaining unit 601 is specifically configured to receive a message advertised by the second routing device. The message includes the first identifier and the second identifier. The processing unit 602 is specifically configured to skip, based on the first identifier and the second identifier, generating a first BIER forwarding entry. The first BIER forwarding entry indicates that a next-hop bit forwarding router neighbor BFR-NBR for the first routing device to reach a device identified by the first identifier is the second routing device. After determining, based on the second identifier, that the second routing device is used only as a BFIR, the processing unit 602 obtains a bit string 0000, that is, a bit corresponding to the BFR-ID of the second routing device is not set. The first routing device does not include a BIER forwarding entry whose bit string is 0000, that is, the first BIER forwarding entry is not generated, which helps save storage space and improve forwarding efficiency.

In another manner, the first routing device is connected to the second routing device by using a first BFR, and the obtaining unit 601 is specifically configured to receive a message advertised by the first BFR. The message includes the first identifier and the second identifier. When the first BFR is a next-hop BFR-NBR for the first routing device to reach the second routing device, the processing unit 602 is specifically configured to skip, based on the first identifier and the second identifier, generating a first BIER forwarding entry. The first BIER forwarding entry indicates that a next-hop BFR-NBR for the first routing device to reach the second routing device is the first BFR. When the first BFR is a next-hop BFR-NBR for the first routing device to reach the second routing device and at least one BFER, the processing unit 602 is specifically configured to skip, based on the first identifier and the second identifier, setting a bit that is in an F-BM of a second BIER forwarding entry and that corresponds to the first identifier. The second BIER forwarding entry indicates that next-hop BFR-NBRs for the first routing device to reach the BFER and the second routing device are the first BFR.

For example, in an implementation, the message includes a sub-TLV used to carry BIER information, the sub-TLV includes a BAR field and a field used to carry the first identifier, and the BAR is used to carry the second identifier. In another implementation, the message includes a sub-TLV used to carry BIER information, the sub-TLV includes a sub-sub-TLV field and a field used to carry the first identifier, and the sub-sub-TLV is used to carry the second identifier. In still another implementation, the message includes a sub-type-length-value sub-TLV used to carry the first identifier and a sub-TLV used to carry the second identifier. Optionally, the message further includes an identifier of the BIER sub-domain. If one BFR belongs to a plurality of BIER sub-domains, for example, a first BIER sub-domain and a second BIER sub-domain, a BFR-ID of the BFR that is valid in the first BIER sub-domain is different from a BFR-ID of the BFR that is valid in the second BIER sub-domain.

For example, when the apparatus 600 is the device 104 in Embodiment 1, the processing unit 602 is configured to support the apparatus 600 in performing S304 and S305 in Embodiment 1. When the apparatus 600 is the device 101 in Embodiment 1, the processing unit 602 is configured to support the apparatus 600 in performing S306 in Embodiment 1. When the apparatus 600 is the device 102 in Embodiment 1, the processing unit 602 is configured to support the apparatus 600 in performing S307 in Embodiment 1.

FIG. 7 is a schematic diagram of a structure of an apparatus for processing a forwarding entry according to an embodiment of this application. The apparatus 700 provided in the embodiment corresponding to FIG. 7 is described from a perspective of a logical structure, and may be disposed on a second routing device. The second routing device may be the device 103 in Embodiment 1 or the device 204 in Embodiment 2. A first routing device in the embodiment corresponding to FIG. 7 may be a device other than the device 103 in Embodiment 1 or a device other than the device 204 in Embodiment 2. The following describes, with reference to FIG. 7, an apparatus structure provided in this embodiment of this application.

The apparatus 700 includes an obtaining unit 701 and a sending unit 702. The obtaining unit 701 is configured to obtain a first identifier and a second identifier. The first identifier is a BFR-ID of the second routing device that is valid in a BIER sub-domain to which the second routing device belongs. The second identifier is used to indicate being used only as a BFIR. The sending unit 702 is configured to advertise the first identifier and the second identifier to the first routing device. In this way, the routing device that receives the second identifier and the first identifier can skip, based on the second identifier, setting a bit that is in a bit string and that corresponds to the first identifier, which helps improve forwarding efficiency and save network resources.

For example, in an implementation, the second routing device is directly connected to the first routing device, and the obtaining unit 701 is specifically configured to generate a message. The message includes the first identifier and the second identifier. The sending unit 702 is specifically configured to advertise the message to the first routing device. In another implementation, the second routing device is connected to the first routing device by using a first BFR, and the obtaining unit 701 is specifically configured to generate a message. The message includes the first identifier and the second identifier. The sending unit 702 is specifically configured to advertise the generated message to the first BFR.

For example, in an implementation, the message includes a sub-TLV used to carry BIER information, the sub-TLV includes a BAR field and a field used to carry the first identifier, and the BAR is used to carry the second identifier. In another implementation, the message includes a sub-TLV used to carry BIER information, the sub-TLV includes a sub-sub-TLV field and a field used to carry the first identifier, and the sub-sub-TLV is used to carry the second identifier. In still another implementation, the message includes a sub-TLV used to carry the second identifier and a sub-TLV used to carry the first identifier. Optionally, the message further includes an identifier of the BIER sub-domain. If one BFR belongs to a plurality of BIER sub-domains, for example, a first BIER sub-domain and a second BIER sub-domain, a BFR-ID of the BFR that is valid in the first BIER sub-domain is different from a BFR-ID of the BFR that is valid in the second BIER sub-domain.

For example, when the apparatus 700 is the device 103 in Embodiment 1, the sending unit 702 is configured to support the apparatus 700 in performing S303 in Embodiment 1.

FIG. 8 is a schematic diagram of a structure of an apparatus for processing a forwarding entry according to an embodiment of this application. The apparatus 800 provided in the embodiment corresponding to FIG. 8 may be the apparatus 600 provided in the embodiment corresponding to FIG. 6, or the apparatus 700 provided in the embodiment corresponding to FIG. 7. The apparatus 800 provided in the embodiment corresponding to FIG. 8 is described from a perspective of a hardware structure. When the apparatus 800 is the apparatus 600, the apparatus 800 may implement a function of a device other than the device 103 in Embodiment 1 or a function of a device other than the device 204 in Embodiment 2. When the apparatus 800 is the apparatus 700, the apparatus 800 may implement a function of the device 103 in Embodiment 1 or a function of the device 204 in Embodiment 2. The apparatus 800 includes a processor 801, a memory 802, a communications bus 804, and a communications interface 803. The processor 801, the memory 802, and the communications interface 803 are connected by using a communications bus 804. The memory 802 is configured to store a program. When the apparatus 800 is the apparatus 600, the processor 801 performs, according to executable instructions included in a program read from the memory 802, a method performed by the device other than the device 103 in Embodiment 1 or a method performed by the device other than the device 204 in Embodiment 2. The processor 801 may perform negotiation and communication with the second routing device, that is, the device 103 in Embodiment 1 or the device 204 in Embodiment 2, by using the communications interface 803. When the apparatus 800 is the apparatus 700, the processor 801 performs, according to executable instructions included in a program read from the memory 802, a method performed by the device 103 in Embodiment 1 or a method performed by the device 204 in Embodiment 2. The processor 801 may perform negotiation and communication with the first routing device, that is, the device other than the device 103 in Embodiment 1 or the device other than the device 204 in Embodiment 2, by using the communications interface 803.

When the apparatus 800 is the apparatus 600, the communications interface 803 is configured to support the apparatus 800 in performing S301, S302, or S304 in Embodiment 1. When the device 800 is the apparatus 700, the communications interface 803 is further configured to support the apparatus 800 in performing S303 in Embodiment 1. In addition to storing program code and data, the memory 802 is further configured to buffer a BIER forwarding entry in Embodiment 1 or Embodiment 2.

An embodiment of this application provides a system for processing a forwarding entry. The system includes a first routing device and a second routing device. The apparatus 600 or the apparatus 800 may be disposed on the first routing device. The apparatus 700 or the apparatus 800 may be disposed on the second routing device. The first routing device may perform an action performed by a device other than the device 103 in Embodiment 1 or an action performed by a device other than the device 204 in Embodiment 2. The second routing device may perform an action performed by the device 103 in Embodiment 1 or an action performed by the device 204 in Embodiment 2.

A general-purpose processor mentioned in embodiments of this application may be a microprocessor, or the processor may be any conventional processor. Steps of the method disclosed with reference to embodiments of the present invention may be directly implemented by using a combination of hardware and a software module in the processor. When the method is implemented by using software, code that implements the foregoing functions may be stored in a computer-readable medium. The computer-readable medium includes a computer storage medium. The storage medium may be any available medium accessible to a computer. The following is used as an example but is not limited: The computer-readable medium may be a random access memory (English full name: random access memory, RAM for short), a read-only memory (English full name: read-only memory, ROM for short), an electrically erasable programmable read-only memory (English full name: electrically erasable programmable read-only memory, EEPROM for short), a compact disc read-only memory (English full name: compact disc read-only memory, CD-ROM for short) or another optical disc memory, a magnetic disk storage medium or another magnetic storage device, or any other medium that can be used to carry or store expected program code in a command or data structure form and can be accessed by a computer. The computer-readable medium may be a compact disc (English full name: compact disc, CD for short), a laser disc, a digital video disc (English full name: digital video disc, DVD for short), a floppy disk, or a Blu-ray disc.

Embodiments in this specification are all described in a progressive manner, for same or similar parts in embodiments, refer to these embodiments. Each embodiment focuses on a difference from other embodiments. Especially, a system embodiment is basically similar to a method embodiment, and therefore is described briefly. For related parts, refer to some descriptions in the method embodiment.

## Claims

1. A method for processing a forwarding entry, wherein the method is applied to a bit indexed explicit replication BIER network, and the method comprises:
obtaining, by a first routing device, a first identifier and a second identifier that are advertised by a second routing device, wherein the first identifier is a bit forwarding router identifier BFR-ID of the second routing device that is valid in a BIER sub-domain to which the second routing device belongs, and the second identifier is used to indicate being used only as a bit forwarding ingress router BFIR; and
skipping, by the first routing device based on the first identifier and the second identifier, setting a bit that is in a forwarding bit mask F-BM and that corresponds to the first identifier, wherein the F-BM is an F-BM comprised in all BIER forwarding entries corresponding to the BIER sub-domain on the first routing device.

2. The method according to claim 1, wherein the first routing device is directly connected to the second routing device, and the obtaining, by a first routing device, a first identifier and a second identifier that are advertised by a second routing device comprises: receiving, by the first routing device, a message advertised by the second routing device, wherein the message comprises the first identifier and the second identifier.

3. The method according to claim 2, wherein the skipping, by the first routing device based on the first identifier and the second identifier, setting a bit that is in a forwarding bit mask F-BM and that corresponds to the first identifier comprises:
skipping, by the first routing device based on the first identifier and the second identifier, generating a first BIER forwarding entry, wherein the first BIER forwarding entry indicates that a next-hop bit forwarding router neighbor BFR-NBR for the first routing device to reach a device identified by the first identifier is the second routing device.

4. The method according to claim 1, wherein the first routing device is connected to the second routing device by using a first bit forwarding router BFR, and the obtaining, by a first routing device, a first identifier and a second identifier that are advertised by a second routing device comprises: receiving, by the first routing device, a message advertised by the first BFR, wherein the message comprises the first identifier and the second identifier.

5. The method according to claim 4, wherein the first BFR is a next-hop bit forwarding router neighbor BFR-NBR for the first routing device to reach the second routing device, and the skipping, by the first routing device based on the first identifier and the second identifier, setting a bit that is in a forwarding bit mask F-BM and that corresponds to the first identifier comprises:
skipping, by the first routing device based on the first identifier and the second identifier, generating a first BIER forwarding entry, wherein the first BIER forwarding entry indicates that a next-hop BFR-NBR for the first routing device to reach the second routing device is the first BFR.

6. The method according to claim 4, wherein the first BFR is a next-hop bit forwarding router neighbor BFR-NBR for the first routing device to reach the second routing device and at least one bit forwarding egress router BFER, and the skipping, by the first routing device based on the first identifier and the second identifier, setting a bit that is in a forwarding bit mask F-BM and that corresponds to the first identifier comprises:
skipping, by the first routing device based on the first identifier and the second identifier, setting a bit that is in an F-BM of a second BIER forwarding entry and that corresponds to the first identifier, wherein the second BIER forwarding entry indicates that next-hop BFR-NBRs for the first routing device to reach the BFER and the second routing device are the first BFR.

7. The method according to any one of claims 2 to 6, wherein
the message comprises a sub-type-length-value sub-TLV used to carry BIER information, the sub-TLV comprises a BIER algorithm BAR field and a field used to carry the first identifier, and the BAR is used to carry the second identifier; or
the message comprises a sub-TLV used to carry BIER information, the sub-TLV comprises a sub-sub-type-length-value sub-sub-TLV field and a field used to carry the first identifier, and the sub-sub-TLV is used to carry the second identifier.

8. The method according to any one of claims 2 to 6, wherein the message comprises a sub-type-length-value sub-TLV used to carry the first identifier and a sub-TLV used to carry the second identifier.

9. The method according to any one of claims 2 to 8, wherein the message further comprises an identifier of the BIER sub-domain.

10. A method for processing a forwarding entry, wherein the method is applied to a bit indexed explicit replication BIER network, and the method comprises:
obtaining, by a second routing device, a first identifier and a second identifier, wherein the first identifier is a bit forwarding router identifier BFR-ID of the second routing device that is valid in a BIER sub-domain to which the second routing device belongs, and the second identifier is used to indicate being used only as a bit forwarding ingress router BFIR; and
advertising, by the second routing device, the first identifier and the second identifier to a first routing device.

11. The method according to claim 10, wherein the second routing device is directly connected to the first routing device, and the obtaining, by a second routing device, a first identifier and a second identifier comprises: generating, by the second routing device, a message, wherein the message comprises the first identifier and the second identifier; and
the advertising, by the second routing device, the first identifier and the second identifier to a first routing device comprises: advertising, by the second routing device, the message to the first routing device.

12. The method according to claim 10, wherein
the second routing device is connected to the first routing device by using a first bit forwarding router BFR, and the obtaining, by a second routing device, a first identifier and a second identifier comprises: generating, by the second routing device, a message, wherein the message comprises the first identifier and the second identifier; and
the advertising, by the second routing device, the first identifier and the second identifier to a first routing device comprises: advertising, by the second routing device, the message to the first BFR.

13. The method according to claim 11 or 12, wherein
the message comprises a sub-type-length-value sub-TLV used to carry BIER information, the sub-TLV comprises a BIER algorithm BAR field and a field used to carry the first identifier, and the BAR is used to carry the second identifier; or
the message comprises a sub-TLV used to carry BIER information, the sub-TLV comprises a sub-sub-type-length-value sub-sub-TLV field and a field used to carry the first identifier, and the sub-sub-TLV is used to carry the second identifier.

14. The method according to claim 11 or 12, wherein the message comprises a sub-type-length-value sub-TLV used to carry the second identifier and a sub-TLV used to carry the first identifier.

15. The method according to any one of claims 11 to 14, wherein the message further comprises an identifier of the BIER sub-domain.

16. An apparatus for processing a forwarding entry, wherein the apparatus is disposed on a first routing device, and the apparatus comprises:
an obtaining unit, configured to obtain a first identifier and a second identifier that are advertised by a second routing device, wherein the first identifier is a bit forwarding router identifier BFR-ID of the second routing device that is valid in a bit indexed explicit replication BIER sub-domain to which the second routing device belongs, and the second identifier is used to indicate being used only as a bit forwarding ingress router BFIR; and
a processing unit, configured to skip, based on the second identifier and the first identifier, setting a bit that is in a forwarding bit mask F-BM and that corresponds to the first identifier, wherein the F-BM is an F-BM comprised in all BIER forwarding entries corresponding to the BIER sub-domain on the first routing device.

17. The apparatus according to claim 16, wherein the first routing device is directly connected to the second routing device, and the obtaining unit is specifically configured to receive a message advertised by the second routing device, wherein the message comprises the first identifier and the second identifier.

18. The apparatus according to claim 17, wherein the processing unit is specifically configured to skip, based on the first identifier and the second identifier, generating a first BIER forwarding entry, wherein the first BIER forwarding entry indicates that a next-hop bit forwarding router neighbor BFR-NBR for the first routing device to reach a device identified by the first identifier is the second routing device.

19. The apparatus according to claim 16, wherein the first routing device is connected to the second routing device by using a first bit forwarding router BFR, and the obtaining unit is specifically configured to receive a message advertised by the first BFR, wherein the message comprises the first identifier and the second identifier.

20. The apparatus according to claim 19, wherein the first BFR is a next-hop bit forwarding router neighbor BFR-NBR for the first routing device to reach the second routing device, and the processing unit is specifically configured to skip, based on the first identifier and the second identifier, generating a first BIER forwarding entry, wherein the first BIER forwarding entry indicates that a next-hop BFR-NBR for the first routing device to reach the second routing device is the first BFR.

21. The apparatus according to claim 19, wherein the first BFR is a next-hop bit forwarding router neighbor BFR-NBR for the first routing device to reach the second routing device and at least one bit forwarding egress router BFER, and the processing unit is specifically configured to skip, based on the first identifier and the second identifier, setting a bit that is in an F-BM of a second BIER forwarding entry and that corresponds to the first identifier, wherein the second BIER forwarding entry indicates that next-hop BFR-NBRs for the first routing device to reach the BFER and the second routing device are the first BFR.

22. The apparatus according to any one of claims 17 to 21, wherein the message comprises a sub-type-length-value sub-TLV used to carry BIER information, the sub-TLV comprises a BIER algorithm BAR field and a field used to carry the first identifier, and the BAR is used to carry the second identifier; or
the message comprises a sub-TLV used to carry BIER information, the sub-TLV comprises a sub-sub-type-length-value sub-sub-TLV field and a field used to carry the first identifier, and the sub-sub-TLV is used to carry the second identifier.

23. The apparatus according to any one of claims 17 to 21, wherein the message comprises a sub-type-length-value sub-TLV used to carry the first identifier and a sub-TLV used to carry the second identifier.

24. The apparatus according to any one of claims 18 to 23, wherein the message further comprises an identifier of the BIER sub-domain.

25. An apparatus for processing a forwarding entry, wherein the apparatus is disposed on a second routing device, and the apparatus comprises:
an obtaining unit, configured to obtain a first identifier and a second identifier, wherein the first identifier is a bit forwarding router identifier BFR-ID of the second routing device that is valid in a bit indexed explicit replication BIER sub-domain to which the second routing device belongs, and the second identifier is used to indicate being used only as a bit forwarding ingress router BFIR; and
a sending unit, configured to advertise the first identifier and the second identifier to a first routing device.

26. The apparatus according to claim 25, wherein the second routing device is directly connected to the first routing device, and the obtaining unit is specifically configured to generate a message, wherein the message comprises the first identifier and the second identifier; and
the sending unit is specifically configured to advertise the message to the first routing device.

27. The apparatus according to claim 25, wherein the second routing device is connected to the first routing device by using a first bit forwarding router BFR, and the obtaining unit is specifically configured to generate a message, wherein the message comprises the first identifier and the second identifier; and
the sending unit is specifically configured to advertise the generated message to the first BFR.

28. The apparatus according to claim 26 or 27, wherein the message comprises a sub-type-length-value sub-TLV used to carry BIER information, the sub-TLV comprises a BIER algorithm BAR field and a field used to carry the first identifier, and the BAR is used to carry the second identifier; or
the message comprises a sub-TLV used to carry BIER information, the sub-TLV comprises a sub-sub-type-length-value sub-sub-TLV field and a field used to carry the first identifier, and the sub-sub-TLV is used to carry the second identifier.

29. The apparatus according to claim 26 or 27, wherein the message comprises a sub-type-length-value sub-TLV used to carry the second identifier and a sub-TLV used to carry the first identifier.

30. The apparatus according to any one of claims 26 to 29, wherein the message further comprises an identifier of the BIER sub-domain.

31. A routing device, comprising the apparatus according to any one of claims 16 to 30.
